# FASCICULE DE BREVET EUROPEEN

(11) **EP 0 932 317 B1**
(45) Date de publication et mention de la délivrance du brevet: **25.05.2005**
(21) Numéro de dépôt: 99400079.2
(22) Date de dépôt: 14.01.1999
(51) Int. Cl.: H04Q 7/32, H04L 9/32

(54) **Procédé de transfert d'information chiffrée entre un module d'identification d'abonné et un terminal mobile radio**
Verfahren zur verschlüsselten Datenübertragung zwischen einem Teilnehmer-Identifikationsmodul und einem Mobilfunkendgerät
Method for crypted data transmission between a subscriber identification module and a mobile radio terminal

(30) Priorité: 26.01.1998 FR 9800771
(43) Date de publication de la demande: 28.07.1999
(73) Titulaire: ALCATEL, 75008 Paris (FR)
(72) Inventeur: Vasnier, Frédéric, 92700 Colombes (FR); Lelong-Gilbert, Anna-Gaelle, 78220 Viroflay (FR); Hubbe, Pascal, 75014 Paris (FR); Choquet, Christophe, 75015 Paris (FR)
(74) Mandataire: Feray, Valérie

(56) Documents cités:
- WO-A-93/07697
- DE-A- 19 527 715
- US-A- 5 384 847
- WATTS A: "Datenverschlüsselung in der Chipkarte. "Public-Key"-Verfahren setzen sich durch" ELEKTRONIK, vol. 43, no. 22, 31 octobre 1994, XP000474163

## Description

Le domaine de l'invention est celui des systèmes de radiocommunications et notamment, mais non exclusivement, des systèmes tels que le GSM" (pour "Global System for Mobile communications" en anglais) et le "DCS" 1800 (pour "Digital Cellular System" en anglais).

D'une façon générale, dans un tel système, l'usager communique par une station mobile constituée d'un terminal mobile qui coopère avec un module d'identification d'abonné, couramment appelé carte "SIM" ("Subscriber Identity Module" en anglais, dans le standard GSM).

La recommandation GSM 11.11 préconise que des données liées aux services offerts par les réseaux de radiocommunications soient, comme des données liées à l'identification d'abonné, stockées dans des zones de mémoire de la carte SIM.

La norme de télécommunication européenne "ETS" ("European Telecommunication Standard" en anglais), définit l'interface entre le module d'identification d'abonné et le terminal mobile.

Selon les recommandations GSM 11.11 et 11.14, on utilise un jeu de commandes relatives à l'utilisation de la carte SIM, dénommé "SIM Application Toolkit" en anglais, et jeu de commandes SIM dans ce qui suit. Ce jeu de commandes SIM regroupe un ensemble d'applications et de procédures associées pouvant être utilisé au cours de sessions de communication entre un terminal mobile et une carte SIM qui lui est associée. Les communications entre un terminal mobile et une carte SIM associcée sont notamment décrites dans la demande de brevet DE 19 527 715.

Généralement, la carte SIM est une carte à puce destinée à personnaliser la station mobile. En effet, la personnalisation de la station mobile est nécessaire dans le cas des terminaux mobiles portables qui comportent un risque élevé de perte ou de vol, pouvant conduire à une utilisation frauduleuse.

La solution offerte à l'usager pour limiter le risque d'une telle utilisation frauduleuse est l'emploi d'une carte SIM amovible, que l'usager pourra retirer du terminal mobile, toutes les fois qu'il devra se séparer de ce demier. Sans carte SIM, le terminal mobile ne pourra plus permettre qu'un nombre limité de types de communications, les communications d'urgence, en particulier.

Toutefois, cette mesure ne résoud pas complètement le problème. Il est encore possible à un fraudeur en possession d'un terminal mobile de simuler la carte SIM qui lui est normalement associée, en vue d'une utilisation frauduleuse de ce terminal mobile, éventuellement après avoir interceptés des messages régulièrement échangés entre ce terminal mobile et sa carte SIM.

La recherche d'une telle utilisation frauduleuse est à craindre en particulier depuis la commercialisation de cartes dites "prépayées". En effet, après la reconnaissance (fraudée) qu'une station contient une telle carte, l'utilisation de la station devient libre, puisque le temps de communication est supposé imputé au compte prépayé inclus dans la carte. La situation est similaire dans le cas de comptes prépayés chargés à partir d'une carte elle-même prépayée (la fraude portant sur le chargement du compte).

La présente invention vise à proposer une solution à ce problème, de nature à rendre toute fraude quelle qu'elle soit si difficile qu'elle devienne improbable.

A cette fin, l'invention a donc pour objet un procédé de transfert d'information entre un module d'identification d'abonné et un terminal mobile constituant une station d'un système de radiocommunication. Selon l'invention, une partie au moins des informations transférées entre ledit module et ledit terminal sont protégées par chiffrement, au moyen d'une clé utilisée tant dans ledit module que dans ledit terminal. Cette clé est définie pour partie au moins par une donnée périodiquement variable du système.

Selon l'invention, la donnée périodiquement variable est une fonction d'horloge propre au système de radiocommunication.

De préférence, ladite clé est en outre définie au moins partiellement par une autre donnée propre à la station mobile.

De préférence aussi, les données définissant ladite clé sont réunies, tant dans ledit module que dans ledit terminal, à l'occasion de chaque transfert d'informations protégé par chiffrement.

L'invention a également pour objet un terminal mobile et une carte SIM respectivement adaptés afin de pouvoir appliquer ledit procédé de transfert d'informations chiffrées.

D'autres caractéristiques et avantages de l'invention apparaîtront à la lecture de la description suivante d'un mode de réalisation de l'invention, donné à titre de simple exemple non limitatif, en se référant aux figures annexées, dans lesquels :
- la figure 1 présente un schéma simplifié d'un mode de réalisation d'un module d'identification d'abonné selon l'invention ;
- la figure 2 présente un schéma simplifié d'un mode de réalisation d'un terminal mobile selon l'invention, destiné à coopérer avec le module d'identification d'abonné de la figure 1 ;
- la figure 3 est un organigramme simplifié d'un mode de réalisation du procédé de transfert d'information de l'invention,
- la figure 4 représente un message transmis d'un terminal mobile à un module d'identification d'abonné dans le cadre du procédé de la figure 3,
- la figure 5 représente des moyens permettant l'obtention d'une clé de chiffrement, dans le module d'identification d'abonné de la figure 1.

La description suivante traite de la mise en oeuvre de l'invention dans le cas particulier d'un système de radiocommunication selon le standard GSM. Il est clair que l'homme du métier saura étendre les principes évoqués ci-dessus non seulement au système DCS1800 déjà mentionné, mais aussi à d'autres types de systèmes de radiocommunication.

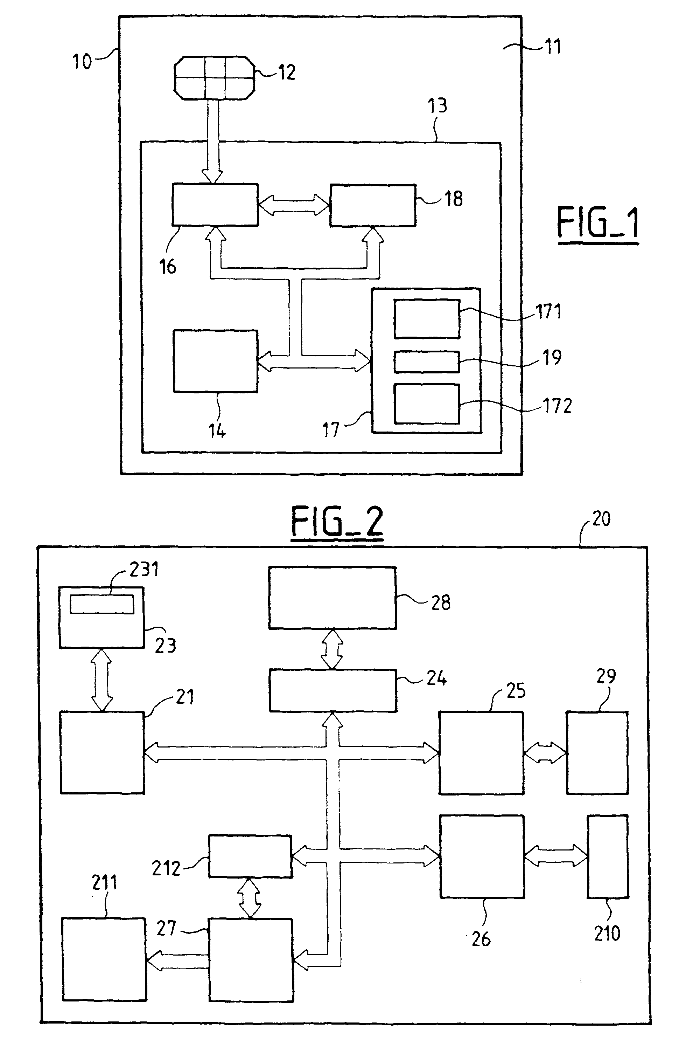

La figure 1 représente le diagramme général d'un mode de réalisation d'une carte SIM 10 constituée notamment d'un support 11, qui porte des plages de contact de raccordement 12 et une puce semi-conductrice 13. Celle-ci comprend notamment des moyens de traitement de données 14 (typiquement, un microprocesseur), couplés à un bus bidirectionnel auquel sont connectés les pages de contact 12, par l'intermédiaire d'une unité de transmission 16, ainsi qu'une mémoire 17. Une unité de chiffrement 18 est couplée à l'unité de transmission 16, et la mémoire 17 comprend une zone 19 dévolue à l'information de chiffrement.

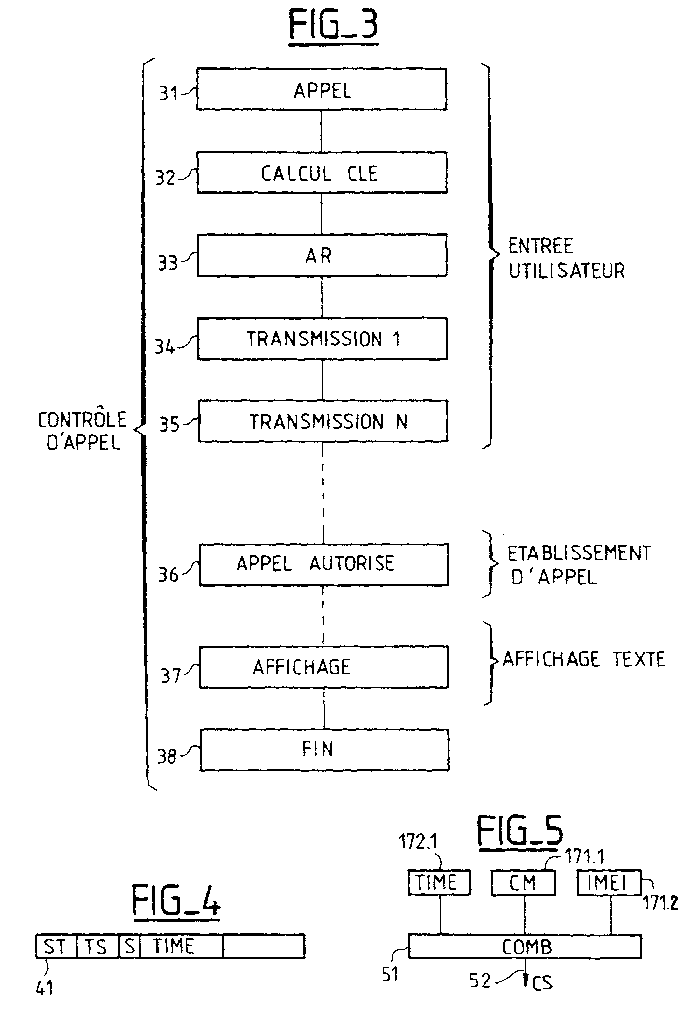

La mémoire 17, de façon classique, comprend un mémoire permanente 171 dans laquelle sont inscrites des données qui sont associées à un abonnement téléphonique permettant l'exploitation d'une station mobile incorporant la carte SIM 10, ainsi que les programmes nécessaires au fonctionnement du microprocesseur 14. Ces données peuvent être inscrites là par l'opérateur d'un réseau de radiocommunication, ou par un agent commercial, et ont généralement un caractère permanent. Certaines données cependant peuvent être modifiées par action spéciale du microprocesseur 14 et ont ainsi un caractère semi-permanent. La mémoire 17 comprend aussi une mémoire de travail 172 utilisée par le microprocesseur pour stocker des données en provenance d'un terminal mobile dans lequel est insérée la carte SIM 10, ainsi que des données résultant des traitements accomplis par le microprocesseur 14, certaines d'entre elles devant être transmises au terminal mobile. La zone de mémoire 19 sera de préférence distribuée entre la mémoire permanente 171 et la mémoire de travail 172, comme on le verra par la suite en référence à la figure 5.

Le mode général de fonctionnement de la carte SIM, initialement inactive, est l'accomplissement d'une session initialisée par le terminal mobile, conformément au jeu de commandes SIM précédemment mentionné, et donnant lieu à transmission de données par les plages de contact 12 et l'unité de transmission 16, à destination du microprocesseur 14. En réponse, le microprocesseur 14, en relation avec la mémoire 17 déroule un programme issu de la mémoire permanente 171 qui l'amène à stocker des données fournies par le terminal mobile dans la mémoire de travail 172, à traiter ces données et à en extraire d'autres de la mémoire permanente 171, pour préparer des résultats de traitement qui sont stockés dans la mémoire de travail 172. Dans ce cadre, le microprocesseur 14 cause également le transfert de données de résultats préparées dans la mémoire 172, par l'organe de transmission 16, en direction du terminal mobile. Ces transferts de données, éventuellement multiples, étant accomplis, la session se termine et la carte SIM redevient inactive.

Selon l'invention, la carte est aménagée, par l'adjonction de l'unité de chiffrement 18 et de la zone de mémoire d'information de chiffrement 19, de manière à ce que les transferts de données que l'on vient de mentionner soient protégés par chiffrement. La technique de chiffrement est bien connue et ne sera pas ici décrite. Elle nécessite une clé, suite de données de chiffrement confidentielles, combinées dans l'unité de chiffrement 18 avec les données à transmettre, pour foumir une suite de signaux inintelligibles, sauf à celui qui possède la clé permettant de procéder à l'opération inverse, le déchiffrement, restituant l'information d'origine. La clé est engendrée dans l'unité de chiffrement 18, à l'aide d'une information de clé qui peut être préparées par le microprocesseur 14 et lui être communiquée par le bus 15. On en discutera par la suite dans le cadre de la description du procédé de transfert d'information de l'invention, faite en se référant à la figure 3.

La figure 2 représente le diagramme général d'un mode de réalisation d'un terminal mobile 20 qui comprend, des moyens de traitement de données 21 (typiquement, un microprocesseur) associés à une mémoire 23, lesquels pilotent, via un bus bidirectionnel les autres moyens du terminal.

Le microprocesseur 21 commande notamment différents dispositifs d'interface 24 à 26 respectivement avec un écran 28, un clavier 29 et un ensemble microphone/haut-parleur 210. Il commande en particulier un dispositif de transmission 27 associée au bloc d'éléments de contact 211 qui viennent en contact électrique avec les plages de contact d'une carte SIM insérée dans le terminal. Additionnellement selon l'invention, un dispositif de chiffrement 212 est couplé au dispositif de transmission 27 et la mémoire 23 comprend un emplacement 231 dévolue à l'information de chiffrement.

On ne décrira pas le fonctionnement de ce terminal mobile 20, qui sortirait du cadre de la présente invention. Il suffit d'indiquer que, dans le cours de ce fonctionnement, l'exploitation requiert que soit utilisée des informations stockées dans la carte SIM. Le microprocesseur 21 du terminal mobile intialise alors une session, conformément au jeu de commandes SIM précédemment mentionné, et donnant lieu à des transferts de données dans les deux sens par le dispositif de transmission 27 et le blocs d'éléments de contact 211, dans le cadre défini dans la description relative à la figure 1.

Selon l'invention, le terminal mobile est aménagé, par l'adjonction du dispositif de chiffrement 212 et de l'emplacement de mémoire d'information de chiffrement 231, de manière à ce que les transferts de données, comme on l'a déjà mentionné, soient protégés par chiffrement.

La figure 3 illustre un mode de mise en oeuvre de l'invention dans un procédé de transfert d'information entre un module d'identification d'abonné tel que la carte SIM de la figure 1 et un terminal mobile de radiocommunication tel que celui de la figure 2.

On se place à titre d'exemple dans le cas où l'utilisateur vient de presser des touches de son clavier 29 pour un appel départ. Il conclut en appuyant sur une touche de validation et, à ce moment, le terminal doit alerter la carte SIM pour contrôler si l'appel est autorisé ou non, et dans le cas d'une carte prépayée, si le crédit subsistant permet l'envoi d'appel.

Dans une première étape 31, le terminal mobile fait appel au jeu de commande SIM pour une session dénommée CONTRÔLE D'APPEL. Cette session comprend plusieurs parties. La première, dénommée ENTREE UTILISATEUR, commence par une étape 31, dénommée APPEL, qui comprend l'activation de la carte SIM et l'envoi par le terminal mobile à la carte SIM (au microprocesseur de la carte, plus précisément) d'un message 41 qui est illustré par la figure 4. Ce message comprend, entre autres, une donnée ST qui l'identifie en tant qu'appartenant à une commande SIM, une donnée TS qui identifie le type de session (en l'occurrence ENTREE UTILISATEUR), une indication S qui l'identifie en tant que premier message d'une session et, enfin, une donnée TIME. Cette donnée TIME est une information variable avec le temps et propre au système de radiocommunication, de sorte qu'il n'est pas nécessaire de prévoir des moyens pour la créer, et qu'il suffit de la lire dans le terminal mobile sur un dispositif qui la contient déjà pour un autre usage ; ce sera avantageusement l'information de temps dite "horloge GSM", qui comprend des éléments T1, T2, T3, bien connus dans le système GSM et définis par les recommandations 05.02 et 05.10 de la norme GSM. L'étape 31 comprend aussi, bien entendu la réception de ce message dans la carte SIM. Cette étape s'accomplit hors chiffrement, c'est-à-dire que le dispositif de chiffrement 212 du terminal mobile et l'unité de chiffrement 18 de la carte SIM ne sont pas actifs et n'interviennent pas dans la transmission.

La transmission de ce message conduit à une étape 32, dénommée CALCUL CLE, comprenant le calcul d'une clé de chiffrement, conformément aux dispositions illustrée par la figure 5. La figure 5 concerne plus particulièrement l'exécution de ce calcul dans la carte SIM, mais on verra que le même calcul est aussi effectué dans le terminal mobile. Une zone 171.1 de la mémoire permanente 17 contient une clé-mère CM. Elle est propre au fabricant ou à l'opérateur et a été inscrite là en même temps que les autres données attachées à l'abonnement téléphonique. Une autre zone 171.2 de la mémoire 17 contient une indication IMEI (International Mobile Equipment Identity, en anglais, dans la terminologie du système GSM), numéro propre au terminal mobile et inscrit dans la carte lors de la souscription de l'abonnement comme indiqué précédemment. La donnée TIME est enfin enregistrée temporairement, au cours de l'étape 31, dans une zone 172.1 de la mémoire de travail 172. Ces trois éléments sont combinés dans un dispositif de combinaison 51 pour produire en 52 une information génératrice de clé CS. Le dispositif de combinaison 51 peut être câblé dans l'unité de chiffrement 18, le microprocesseur lui envoyant les trois éléments ci-dessus, ou peut être programmé pour être accompli par le microprocesseur 14, qui foumit alors directement l'information CS à l'unité de chiffrement 18.

Parallèlement, et il n'est pas nécessaire de le décrire en détail, le même processus est accompli dans le terminal mobile, des emplacements représentés collectivement en 231 de la mémoire 23 contenant de la même façon les trois éléments ci-dessus et des moyens étant prévus pour les combiner conformément à la figure 5, en une information génératrice de clé qui est finalement disponible dans le dispositif de chiffrement 212.

L'étape 33, dénommée AR, consiste ensuite essentiellement en la transmission par la carte SIM au terminal mobile d'un signal d'accusé de réception et d'ordre de mise en oeuvre de la transmission chiffrée. Il en résulte la mise en action simultanée de l'unité de chiffrement 18 et du dispositif de chiffrement 212 à l'égard des données transmises dans les deux sens au travers de l'interface terminal/carte SIM qui s'interposent dans le trajet de transmission des données entre l'unité de transmission 16 ou le dispositif de transmission 27 et l'élément source ou destinataire, microprocesseur 14 ou mémoire 172, dans la carte SIM, microprocesseur 21 ou mémoire 23, dans le terminal mobile .

A partir de ce moment des étapes 34..., 35 dénommées TRANSMISSION 1, ..., TRANSMISSION N comprennent la transmission de données sous forme chiffrée. La transmission entre la carte SIM, même si elle est interceptée au niveau des plages de contact 12 ou des éléments de contact 211, ne peut plus être exploitée. Il n'est pas davantage possible de la falsifier. L'objectif de l'invention est ainsi atteint.

Les informations génératrices de clé, qui sont les mêmes dans la carte SIM et dans le terminal mobile, sont mises en oeuvre dans un dispositif générateur de clé tel qu'un registre à décalage à réaction, tant dans l'unité de chiffrement 18 que dans le dispositif de chiffrement 212 et produisent deux clés identiques, l'une utilisée pour le chiffrement à l'extrémité d'émission et l'autre pour le déchiffrement à l'extréminé de réception.

La figure 3 illustre, après les étapes 31 à 35 déjà décrites et relatives à un transfert de données désigné par ENTREE UTILISATEUR, d'un autre transfert dénommé ETABLISSEMENT D'APPEL, qui est l'un des transferts prévus dans le jeu de commande SIM, dans lequel une étape 36 dénommée APPEL AUTORISE comprend l'envoi, chiffré, d'un message indiquant que l'appel défini par l'étape 31 est autorisé. Il en résultera l'émission effective de l'appel considéré par le terminal mobile, selon le système GSM. Parallélement, une autre étape 37, dénommée AFFICHAGE, d'un transfert AFFICHAGE TEXTE, commande l'affichage d'un texte correspondant à l'opération d'appel en cours sur l'écran du terminal mobile. A la fin de la session, dans une étape 38 dénommée FIN, l'unité de chiffrement 18 et le dispositif de chiffrement 212 sont désactivés. La clé utilisée précédemment n'est pas applicable. La session est close. Une autre session devra avoir lieu sur le modèle de celle que l'on vient de décrire.

Il est bien évident que les descriptions qui précèdent peuvent donner lieu à de nombreuses variantes sans sortir pour autant du cadre de l'invention telle qu'elle est définie dans les revendications. La composition de la clé peut en particulier être différente, du moment qu'elle comprend une information variable dépendant du système. Le numéro IMEI pourrait ainsi être remplacé par un autre numéro propre à l'abonnement et disponible dans la carte SIM comme dans le terminal mobile. Une autre information variable du système (distance de la station de base, niveau d'émission, etc.) pourrait remplacer l'horloge GSM. Le mode d'emploi de l'information génératrice de clé pourrait être différent, le microprocesseur de la carte et du terminal pouvant, par exemple, se charger entièrement du chiffrement, à la place d'un organe dédié tel que l'unité 18 ou le dispositif 212. De même, la mise en oeuvre d'une clé calculée est faite sur la base d'une session du jeu de commandes SIM. Il est bien sûr possible par des aménagements à la portée de l'homme de métier d'adopter une autre base, soit un transfert simple, soit au contraire toute une période d'activité du terminal. Les exemples décrits dans ce qui précède ne représentent en effet que des solutions préférées dans l'application envisagée.

## Revendications

1. Procédé de transfert d'information entre un module d'identification d'abonné (10) et un terminal mobile (20) constituant une station d'un système de radiocommunication, dans lequel une partie au moins des informations transférées entre ledit module et ledit terminal sont protégées par chiffrement, au moyen d'une clé (CS) utilisée tant dans ledit module (10) que dans ledit terminal (20), **caractérisé en ce que** la clé (CS) est définie, pour partie au moins (TIME), par une donnée périodiquement variable (T1, T2, T3) dudit système.

2. Procédé de transfert d'information conforme à la revendication 1, **caractérisé en ce que** la donnée périodiquement variable (T1, T2, T3) est une fonction d'horloge propre au système de radiocommunication.

3. Procédé de transfert d'information conforme à la revendication 1 ou 2, **caractérisé en ce que** la clé (CS) est définie pour une autre partie au moins par une donnée (IMEI) propre à la station mobile.

4. Procédé de transfert d'information conforme à l'une quelconque des revendications 1 à 3, **caractérisé en ce** les données définissant ladite clé (CS) sont réunies, tant dans ledit module (10) que dans ledit terminal (20), à l'occasion de chaque transfert d'informations protégé par chiffrement.

## Patentansprüche

1. Verfahren zur Informationsübertragung zwischen einem Teilnehmeridentifizierungsmodul (10) und einem mobilen Endgerät (20), die eine Station eines Funksystems bilden, wobei mindestens ein Teil der zwischen dem Modul und dem Endgerät übertragenen Informationen mittels eines Schlüssels (CS), der sowohl in dem Modul (10) als auch in dem Endgerät (20) verwendet wird, durch Verschlüsselung geschützt ist, **dadurch gekennzeichnet, dass** der Schlüssel (CS) mindestens für einen Teil (TIME) durch ein periodisch variables Datenelement (T1, T2, T3) des Systems festgelegt ist.

2. Verfahren zur Informationsübertragung nach Anspruch 1, **dadurch gekennzeichnet, dass** das periodisch variable Datenelement (T1, T2, T3) eine dem Funksystem eigene Zeitgeberfunktion ist.

3. Verfahren zur Informationsübertragung nach Anspruch 1 oder 2, **dadurch gekennzeichnet, dass** der Schlüssel (CS) für einen anderen Teil mindestens durch ein der mobilen Station eigenes Datenelement (IMEI) festgelegt ist.

4. Verfahren zur Informationsübertragung nach einem der Ansprüche 1 bis 3, **dadurch gekennzeichnet, dass** die den Schlüssel (CS) festlegenden Daten sowohl in dem Modul (10) als auch in dem Endgerät (20) bei jeder durch Verschlüsselung geschützten Informationsübertragung zusammengestellt werden.

## Claims

1. A method for transferring information between a subscriber identity module (10) and a mobile terminal (20) composing a station of a radiocommunication system, wherein at least part of the information transferred between said module and said terminal is protected by encryption, by means of a key (CS) used both in said module (10) and said terminal (20), **characterized in that** the key (CS) is defined at least one part (TIME) by a periodically variable data element (T1, T2, T3) of said system.

2. The information transfer method according to claim 1, **characterized in that** the periodically variable data element (T1, T2, T3) is a timer function specific to said radiocommunication system.

3. The information transfer method according to claim 1 or 2, **characterized in that** the key (CS) is defined at least for another part by a data element (IMEI) specific to the mobile station.

4. The information transfer method according to any of claims 1 to 3, **characterized in that** the data defining said key (CS) is collected both in said module (10) and in said terminal (20) at each information transfer protected by encryption.
